# EUROPÄISCHE PATENTSCHRIFT

(11) **EP 1 684 937 B1**
(45) Veröffentlichungstag und Bekanntmachung des Hinweises auf die Patenterteilung: **13.02.2008**
(21) Anmeldenummer: 04818762.9
(22) Anmeldetag: 09.11.2004
(51) Int. Cl.: B23P 15/00, F16H 61/24, F16H 63/38, B21D 53/00

(54) **VERFAHREN ZUR HERSTELLUNG EINER RASTIERUNGSHÜLSE, INSBESONDERE FÜR EIN SCHALTGETRIEBE**
METHOD FOR THE PRODUCTION OF A LOCKING SLEEVE, PARTICULARLY FOR A MANUAL TRANSMISSION
PROCÉDÉ DE FABRICATION D'UN MANCHON DE VERROUILLAGE, EN PARTICULIER POUR UNE BOÎTE DE VITESSES

(30) Priorität: 19.11.2003 DE 10354167; 24.04.2004 DE 102004020136
(43) Veröffentlichungstag der Anmeldung: 02.08.2006
(73) Patentinhaber: FSG Automotive AG, 09376 Oelsnitz (DE)
(72) Erfinder: KIRSCHDORF, Dieter, 46282 Dorsten (DE)
(74) Vertreter: Linnemann, Winfried
(86) Internationale Anmeldenummer: PCT/EP2004/012643
(87) Internationale Veröffentlichungsnummer: WO 2005/049264

(56) Entgegenhaltungen:
- EP-A2- 0 974 777
- EP-A2- 0 985 857
- WO-A1-96/03684
- DE-A1- 10 029 620

## Beschreibung

Die vorliegende Erfindung betrifft ein Verfahren zur Herstellung einer metallischen Rastierungshülse mit einer Kulisse, insbesondere für ein Schaltgetriebe eines Kraftfahrzeugs, wobei die Rastierungshülse Teil eines Schaltdoms ist, der die Verbindung zwischen der inneren Schaltung des Schaltgetriebes und einem zugehörigen Gangwählhebel bildet, wobei die Rastierungshülse aus einem Ausgangsrohling durch Umformen und Schneiden erzeugt wird.

Ein solches Verfahren ist aus der EP 0 985 857 A2 bekannt.

Die Rastierungshülse mit ihrer Kulisse dient innerhalb einer Gangschaltung zur Führung des Schalthebels, um exakt den jeweils gewünschten Gang einzulegen. Dabei soll die Rastierungshülse für ein zugleich weiches und exaktes Schaltverhalten, für eine genaue Null-Lage des Schalthebels in der Wählebene und für eine Rückführung des Schalthebels aus dem Rückwärtsgang in die Null-Lage sorgen. Aus diesem Grunde werden relativ hohe Forderungen an die Genauigkeit und an die Haltbarkeit der Rastierungshülse gestellt.

Aus der einschlägigen Praxis sind bisher zwei Verfahren zur Herstellung einer metallischen Rastierungshülse mit einer Kulisse bekannt.

In einem ersten bekannten Verfahren wird die Rastierungshülse aus zwei einzeln gestanzten und geformten Blechen gefertigt. Die beiden aus den Blechen gefertigten Bauteile werden in einer Hilfsvorrichtung zueinander justiert und mittels einer umlaufenden Schweißnaht, vorzugsweise eine Laserschweißnaht, zusammengefügt.

Als nachteilig ist bei diesem bekannten Verfahren anzusehen, daß es an der fertigen Rastierungshülse zu Formungenauigkeiten und insbesondere zu Absätzen in der Kontur der Kulisse im Bereich der Schweißnaht kommt. Jeder noch so kleine Absatz in der Kulisse führt in der Praxis zu einer Störung, insbesondere zu einer hakenden Bewegung der Gangschaltung, was unerwünscht ist.

Ein zweites bekanntes Verfahren sieht vor, daß die Rastierungshülse aus einem der Abwicklung des Bauteils entsprechenden Blechstreifen zugeschnitten und zur Endform gerollt wird. Dieses gerollte Bauteil wird dann in einer Hilfsvorrichtung justiert und mit einer Schweißnaht, auch hier vorzugsweise eine Laserschweißnaht, geschlossen.

Auch bei diesem zweiten bekannten Verfahren kommt es nachteilig zu Formungenauigkeiten an der fertigen Rastierungshülse, was entweder Nacharbeiten erfordert oder zu einem relativ hohen Anteil von Ausschußprodukten in der Produktion führt.

Für die vorliegende Erfindung stellt sich deshalb die Aufgabe, ein Verfahren der eingangs genannten Art zu schaffen, das die dargelegten Nachteile vermeidet und das die wirtschaftliche Herstellung von Rastierungshülsen mit einer hohen Genauigkeit und guten funktionalen Eigenschaften bei Vermeidung von Nacharbeiten und Ausschuß in der Produktion erlaubt.

Die Lösung dieser Aufgabe gelingt erfindungsgemäß mit einem Verfahren der eingangs genannten Art, das durch die folgenden Verfahrensschritte gekennzeichnet ist:
a) aus einem Metallrohr wird ein Ausgangsrohling in Form eines Rohrabschnitts abgelängt,
b) der rohrförmige Ausgangsrohling wird über einen Teil seiner axialen Länge in seinem Durchmesser aufgeweitet oder eingezogen, wodurch ein hülsenförmiger, im Durchmesser gestufter Grundkörper gebildet wird,
c) der Grundkörper wird durch wenigstens einen Preßvorgang in seine geometrische Endform gebracht und
d) in den Grundkörper wird zur Bildung der Rastierungshülse die Kulisse eingeschnitten.

Das erfindungsgemäße Verfahren bietet den wesentlichen Vorteil, daß keinerlei Schweißverbindung mehr hergestellt werden muß. Dies wird dadurch erreicht, daß das Verfahren von einem rohrförmigen Ausgangsrohling ausgehend die weiteren Umformungen vornimmt. Da keine Schweißverbindung mehr hergestellt werden muß, kann ein aufwendiger Arbeitsgang entfallen. Außerdem werden so sämtliche Ungenauigkeiten vermieden, die infolge der Schweißverbindung bei den bekannten Verfahren auftreten. Insbesondere ist es bei dem erfindungsgemäßen verfahren prinzipiell ausgeschlossen, daß zwei Kanten des Bauteils, die miteinander verschweißt werden müssen, einen Versatz zueinander aufweisen, der zu Kanten oder Stufen in der Kontur der Kulisse führt. Mit dem erfindungsgemäßen Verfahren kann man deshalb Rastierungshülsen mit einer sehr hohen Genauigkeit herstellen, die mit den bisher bekannten Verfahren nicht erreichbar war. Die Rastierungshülsen, die nach dem erfindungsgemäßen Verfahren hergestellt werden, weisen sehr geringe Toleranzen auf, wodurch Nachbearbeitungen und Ausschuß vermieden werden. Zudem sind die nach dem erfindungsgemäßen Verfahren hergestellten nahtlosen Rastierungshülsen besonders stabil und haltbar und lassen daher einen langen störungsfreien Betrieb erwarten. Außerdem wird mit den nach dem erfindungsgemäßen Verfahren hergestellten Rastierungshülsen eine besonders exakte und gleichzeitig weiche Schaltung der Gänge des zugehörigen Schaltgetriebes erreicht.

Die Ausführung der Verfahrensschritte erfolgt bevorzugt in der vorstehend und im Anspruch 1 angegebenen Reihenfolge zeitlich nacheinander; alternativ können die Schritte c) und d) auch in ihrer zeitlichen Reihenfolge vertauscht werden, ohne daß die Vorteile des erfindungsgemäßen Verfahrens verlorengehen. Auch besteht die Möglichkeit, bei Anwendung mehrerer Umformvorgänge diese zum Teil zeitlich vor und zum Teil zeitlich nach dem Einschneiden der Kulisse durchzuführen.

Eine bevorzugte Weiterbildung des erfindungsgemäßen Verfahrens schlägt vor, daß ein rohrförmiger Ausgangsrohling mit einer axialen Länge, die mehr als doppelt so groß ist wie die axiale Länge des Grundkörpers, eingesetzt wird, daß der Abschnitt des. Ausgangsrohlings, der in seinem Durchmesser aufgeweitet oder eingezogen wird, ein mittlerer Abschnitt des Ausgangsrohlings ist und daß nach dem Aufweiten oder Einziehen und nach oder vor dem Preßvorgang oder zwischen zwei Preßvorgängen der Ausgangsrohling quer zu seiner Axialrichtung in zwei Grundkörper geteilt wird. Der Vorteil dieser Ausgestaltung des Verfahrens besteht' insbesondere darin, daß in einem Arbeitsgang jeweils zwei Grundkörper hergestellt werden,können, was besonders wirtschaftlich ist und zu niedrigen Herstellungskosten führt.

Weiter ist bevorzugt vorgesehen, daß der Ausgangsrohling in ein Formwerkzeug eingebracht und durch Innenhochdruck-Umformen mittels eines Druckmediums gemäß Verfahrensschritt b) nur aufgeweitet oder gemäß den Verfahrensschritt b) und c) zugleich aufgeweitet und geformt wird.. Bei diesem Umformverfahren wird durch Ausübung eines Drucks im Inneren des Ausgangsrohlings dieser radial nach außen hin, entsprechend dem eingesetzten Formwerkzeug, nur aufgeweitet oder zugleich aufgeweitet und geformt, wobei der Ausgangsrohling in dem Formwerkzeug, das ihn außenseitig umgibt, festgelegt ist. Vorteilhaft ist hierbei, daß keine festen Werkzeuge in das Innere des Ausgangsrohlings eingeführt werden müssen, sondern daß hier das Druckmedium, das keine feste Gestalt hat, umformend wirkt. Damit gibt es für das Aufweiten und gegebenenfalls Formen des Ausgangsrohlings keine Beschränkungen infolge der in der Praxis relativ geringen Abmessungen des Ausgangsrohlings und der Rastierungshülse, weil das Druckmedium auch bei kleinen Durchmessern des hohlen Inneren des Ausgangsrohlings problemlos in diesen eingeleitet werden kann. Eine gegebenenfalls vorgesehene Formgebung erfolgt neben dem Aufweiten durch die formgebende innere Oberfläche des Formwerkzeugs.

Eine erste bevorzugte Ausgestaltung schlägt vor, daß als Druckmedium eine Flüssigkeit verwendet wird. Mit einer Flüssigkeit als Druckmedium läßt sich der Ausgangsrohling in kaltem Zustand ausreichen weit und genau umformen, wodurch ein einfacher Verfahrensablauf in diesem Verfahrensschritt erreicht wird.

Alternativ zur Flüssigkeit kann als Druckmedium ein Gas verwendet werden.

Bei Verwendung eines Gases als Druckmedium ist bevorzugt weiter vorgesehen, daß der Ausgangsrohling vor oder bei dem Innenhochdruck-Umformen erwärmt wird. Im erwärmten Zustand ist der Ausgangsrohling mit geringerem Kraftaufwand umformbar; zugleich können so schärfere und genauere Formgebungen mit z.B. kleineren Biegeradien und mit geringeren oder sogar ohne Restspannungen im Material des Ausgangsrohlings und damit eine bessere Ausformung der gewünschten Geometrie erreicht werden. Eine unerwünschte Verzunderung der Oberfläche oder thermische Abschreckung des Materials des Ausgangsrohlings kann hierbei vorteilhaft nicht auftreten.

Um offene Flammen zu vermeiden und um eine rasche und doch energiesparende Erwärmung des Ausgangsrohlings zu erzielen, erfolgt das Erwärmen vorzugsweise induktiv. Vorteilhaft ist zudem die induktive Erwärmung mittels elektrischer Energie berührungslos möglich, was diesen Verfahrensschritt einfach macht.

Damit möglichst nur der Ausgangsrohling erwärmt wird, wird zweckmäßig als Formwerkzeug eine keramische Form verwendet, die selbst nicht induktiv erwärmbar ist, sondern ein Induktionsfeld praktisch ungeschwächt zum Ausgangsrohling durchläßt. Die Teilung der Form erlaubt zudem ein schnelles und einfaches Einlegen des Ausgangsrohlings in die Form vor dem Aufweiten und Umformen und ein ebenso.schnelles und einfaches Entnehmen des Ausgangsrohlings aus der Form nach dem Aufweiten und Umformen.

Um eine Überbeanspruchung des Materials des Ausgangsrohlings bei seinem Aufweiten zu vermeiden, wird insbesondere für Anwendungen des Verfahrens mit größeren Aufweitraten vorgeschlagen, daß der Ausgangsrohling in zwei aufeinander folgenden Umformschritten zum Grundkörper umgeformt wird.

In weiterer Ausgestaltung ist dabei bevorzugt vorgesehen, daß zwischen den beiden zuvor erwähnten Umformschritten eine Wärmebehandlung des Ausgangsrohlings erfolgt. Durch die Wärmebehandlung können Spannungen innerhalb des Ausgangsrohlings abgebaut werden, die bei dem ersten Umformschritt entstanden sind. Nach der Wärmebehandlung kann dann ein weiteres Umformen ohne die Gefahr einer Überbeanspruchung des Materials erfolgen. Auf diese Weise sind große Änderungen des Durchmessers des Ausgangsrohlings möglich. Beispielsweise kann der Außendurchmesser des Ausgangsrohlings nach zwei Umformschritten um bis zu 100% größer sein als der Ausgangsdurchmesser des Ausgangsrohlings.

Um den gewünschten Abbau von mechanischen Spannungen innerhalb des Ausgangsrohlings nach dem ersten Umformschritt sicher zu erreichen, ist bevorzugt die Wärmebehandlung des Ausgangsrohlings ein Glühen.

Eine alternative Weiterbildung des erfindungsgemäßen Verfahrens schlägt vor, daß ein rohrförmiger Ausgangsrohling mit einer axialen Länge, die größer ist als die axiale Länge des Grundkörpers, eingesetzt wird und daß der Teil der axialen Länge des Ausgangsrohlings, der in seinem Durchmesser aufgeweitet oder eingezogen wird, ein Endabschnitt des Ausgangsrohlings ist. In dieser Ausgestaltung des Verfahrens wird jeweils aus einem Ausgangsrohling auch ein Grundkörper hergestellt, was zwar von der Wirtschaftlichkeit weniger günstig ist, aber einen leichteren Zugang zum Inneren des Ausgangsrohlings ermöglicht. Damit können auch andere Umformverfahren als das oben erwähnte Innenhochdruck-Umformverfahren eingesetzt werden.

Eine bevorzugte Weiterbildung des zuvor beschriebenen Verfahrens sieht vor, daß der Ausgangsrohling durch Drückwalzen aufgeweitet oder eingezogen wird. Auch mit dem Umformen durch Drückwalzen lassen sich große Umformraten wirtschaftlich realisieren.

Für alle Ausgestaltungen des Verfahrens, wie sie bisher beschrieben wurden, ist weiterhin bevorzugt vorgesehen, daß der Grundkörper nach dem Preßvorgang durch Beschneiden an wenigstens einem seiner Stirnenden auf ein definiertes axiales Längenmaß gebracht wird. Hiermit wird gewährleistet, daß die mit dem Verfahren hergestellt Rastierungshülse nicht nur hinsichtlich ihrer verschiedenen Durchmesserbereiche sondern auch hinsichtlich ihrer axialen Länge ein exaktes Maß erhält. Das Beschneiden ist problemlos möglich, da, wie oben angegeben, der Grundkörper vorzugsweise aus einem Ausgangsrohling mit einem Übermaß in Axialrichtung hergestellt wird. In der Praxis genügt es im allgemeinen, wenn der Ausgangsrohling ein Längen-Übermaß von etwa 1/10 bis 1/3 der gewünschten axialen Länge des Grundkörpers aufweist.

Eine andere Weiterbildung des Verfahrens schlägt vor, daß der Preßvorgang des Grundkörpers nach dem Aufweiten separat und in einer eigenen zweiteiligen Preßform vorgenommen wird. Durch den Einsatz einer nur zweiteiligen Preßform wird auch dieser Verfahrensschritt einfach und kostengünstig gehalten, was zu niedrigen Fertigungskosten für die Rastierungshülse beiträgt. Dabei erfolgt bevorzugt auch dieser Preßvorgang mittels Innenhochdruck-Umformens, um dem Grundkörper die gewünschte geometrische Form zu verleihen. Je nach Ausgestaltung des Verfahrens können also in zwei aufeinanderfolgenden Verfahrensschritten ein Aufweitvorgang und ein anschließender formgebender Preßvorgang erfolgen oder es können in einem einzigen gemeinsamen Verfahrensschritt der Aufweitvorgang und der formgebende Preßvorgang durchgeführt werden.

Bei Bedarf kann nach dem Preßvorgang des Grundkörpers ein Geometrie-Kalibrier-Arbeitsgang erfolgen. Dieser Arbeitsgang erfolgt insbesondere dann, wenn der Preßvorgang noch nicht zu der gewünschten exakten Geometrie des Grundkörpers geführt hat.

Schließlich ist erfindungsgemäß noch bevorzugt vorgesehen, daß das Einschneiden der Kulisse in den Grundkörper durch Laser- oder Wasserstrahlschneiden erfolgt. Das Laser- oder Wasserstrahlschneiden sorgt für einen sehr sauberen Schnitt, wodurch eine Nachbearbeitung der Kontur der Kulisse entbehrlich wird. Mit den genannten Schneidverfahren wird eine Kontur der Kulisse erreicht, die sehr glatt und stetig ist und die insbesondere frei von störenden Stufen oder Absätzen bleibt.

Im folgenden werden zwei beispielhafte Verfahrensabläufe anhand einer Zeichnung erläutert. Die Figuren der Zeichnung zeigen:
- Figur 1: einen Ausgangsrohling nach einem Aufweiten seines mittleren Abschnitts, in Seitenansicht,
- Figur 2: einen durch Pressen und Teilen des Ausgangsrohlings entstandenen Grundkörper in Seitenansicht, teils in weggebrochener Darstellung,
- Figur 3: eine durch Einschlagen einer weiteren Kontur und durch Einschneiden einer Kulisse in den Grundkörper aus Figur 2 gebildete fertige Rastierungshülse, ebenfalls in Seitenansicht, teils in weggebrochener Darstellung,
- Figur 4: die fertige Rastierungshülse aus Figur 3 in einer perspektivischen Ansicht und
- Figur 5: eine zweite fertige Rastierungshülse in geänderter Ausführung mit einem anderen Verfahrensablauf, in einer perspektivischen Ansicht.

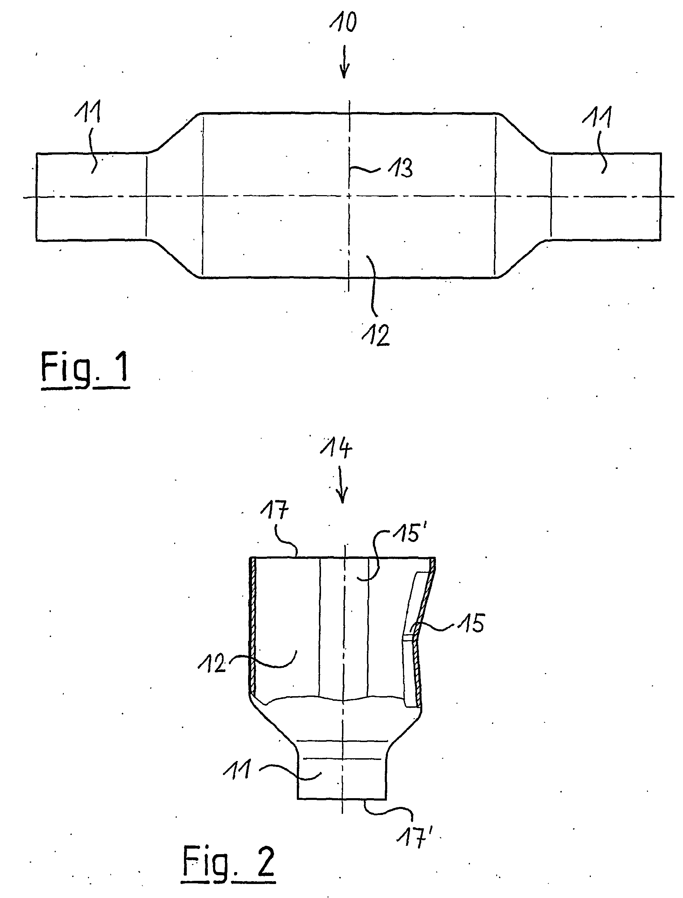

Bei dem in den Zeichnungsfiguren 1 bis 4 beispielhaft dargestellten Verfahrensablauf zur Herstellung einer Rastierungshülse wird als Ausgangsrohling 10 ein aus einem Metallrohr, vorzugsweise Stahlrohr, abgelängter Rohrabschnitt verwendet. Dieser Rohrabschnitt hat zunächst einen Durchmesser, der dem Durchmesser der beiden Endbereiche 11 des in Figur 1 sichtbaren Ausgangsrohlings 10 entspricht. Dieser rohrförmige Ausgangsrohling 10 wird durch ein Innenhochdruck-Umformverfahren in seinem mittleren Abschnitt 12 in seinem Durchmesser aufgeweitet. Dazu wird ein Druckmedium, hier eine hydraulische Flüssigkeit, mit hohem Druck in das hierzu gegen die Umgebung abgesperrte Innere des Ausgangsrohlings 10 eingepreßt, wodurch die Wandung des Ausgangsrohlings 10 gegen ein während dieses Umformens den Ausgangsrohling 10 umgebendes, hier nicht dargestelltes, entsprechend gestaltetes Formwerkzeug gepreßt wird.

Das Formwerkzeug ist beispielsweise eine keramische Form, die geteilt ist, sodaß der Ausgangsrohling 10 vor dem Aufweiten in die getrennten Formteile eingelegt werden kann. Während.des Aufweitens durch Flüssigkeitsdruck ist die Form geschlossen. Nach dem Aufweiten wird die Form wieder geöffnet und der aufgeweitete Ausgangsrohling 10 kann entnommen werden.

Nach diesem Aufweitvorgang hat der Ausgangsrohling 10 die in Figur 1 in Seitenansicht sichtbare Form mit einem aufgeweiteten mittleren hohlzylindrischen Abschnitt 12 und zwei in ihrer ursprünglichen Form verbliebenen hohlzylindrischen Endabschnitten 11. Jeder Endabschnitt 11 ist mit dem mittleren Abschnitt 12 über je einen nicht bezifferten konischen Übergangsabschnitt verbunden.

Dieser Ausgangsrohling 10 aus Figur 1 wird in einem weiteren Verfahrensschritt in einer Presse, die vorzugsweise zweiteilig ist, in seiner Geometrie geformt. Dieser Preßvorgang erfolgt bevorzugt ebenfalls im Innenhochdruck-Umformverfahren. Hierdurch erhält insbesondere der Abschnitt 12 mit dem größeren Durchmesser für die Funktion erforderliche geometrische Konturen seiner Wandung.

In einem weiteren Verfahrensschritt wird der Ausgangsrohling 10 entlang einer senkrecht zur Axialrichtung verlaufenden Ebene 13, die in Figur 1 eingezeichnet ist, in zwei gleiche Grundkörper geteilt. Einen der so hergestellten zwei Grundkörper 14 zeigt die Figur 2 in Seitenansicht. In Figur 2 ist die dem Betrachter zugewandte Seite der Wandung des Abschnitts 12 mit dem größeren Durchmesser weggebrochen, so daß der Blick hier in das Innere des Grundkörpers 14 fällt. In diesem Abschnitt 12 sind die zuvor erzeugten Konturen 15 und 15' sichtbar.

Bei Bedarf wird der Grundkörper 14 an einem oder beiden Stirnenden 17, 17' beschnitten. Durch das Beschneiden des einen oder beider Stirnenden 17, 17' erhält dieser Grundkörper 14 in Axialrichtung eine exakt definierte Länge. Unten in Figur 2 liegt dabei der Abschnitt 11 des Grundkörpers 14 mit dem kleineren Durchmesser und darüber folgt nach einem Übergangsabschnitt der Abschnitt 12 des Grundkörpers 14 mit dem größeren Durchmesser.

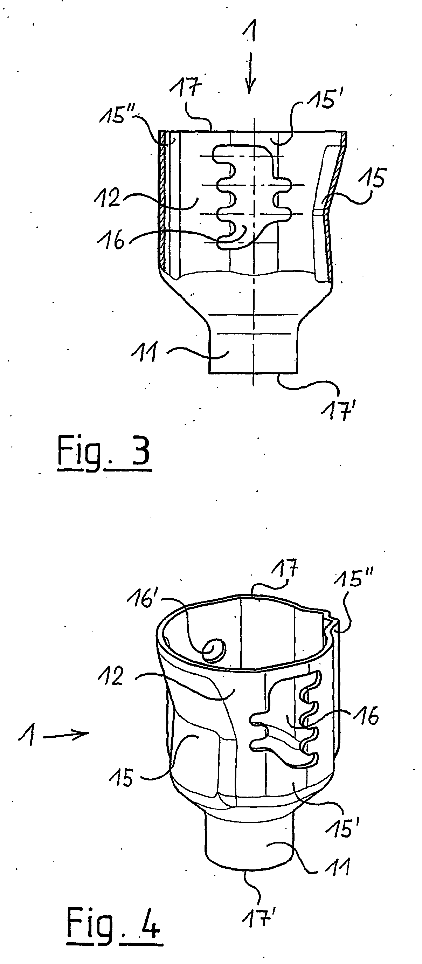

Die in Figur 3 dargestellte fertige Rastierungshülse 1 entsteht aus dem Grundkörper 14 gemäß Figur 2 durch zwei weitere Bearbeitungsschritte. In einem weiteren Umformvorgang wird eine dritte Kontur 15'' in den Abschnitt 12 eingeformt, vorzugsweise eingeschlagen. Diese Kontur 15'' ist die sogenannte "M"-Kontur der Rastierungshülse 1, die für eine gute Funktion der Gangschaltung möglichst präzise hergestellt werden muß.

Weiter wird, wie Figur 3 zeigt, in einem letzten Bearbeitungsschritt in den Grundkörper eine Kulisse 16 eingeschnitten. Die Kulisse 16 wird dabei vorzugsweise durch Laser- oder Wasserstrahlschneiden erzeugt. Hierdurch wird eine glatte und stetige Kontur der Kulisse 16 der Rastierungshülse 1 ohne eine weitere Nachbearbeitung erzielt.

Figur 4 zeigt die fertige Rastierungshülse 1 aus Figur 3 in perspektivischer Ansicht. Unten in Figur 4 liegt der Abschnitt 11 mit dem kleineren Durchmesser und mit der nach unten weisenden Stirnseite 17'. Dieser Abschnitt 11 dient zur Verbindung der Rastierungshülse 1 mit einer hier nicht dargestellten Schaltwelle als Teil der Gangschaltung, insbesondere eines Kraftfahrzeuges.

Nach oben hin schließt sich der Abschnitt 12 mit dem größeren Durchmesser an. In diesem Abschnitt 12 sind die verschiedenen Konturen 15, 15', 15", die für die Funktion der Rastierungshülse 1 benötigt werden, sichtbar. An der dem Betrachter jetzt zugewandten Seite der Rastierungshülse 1 liegt die Kulisse 16, die hier für ein Fünfganggetriebe mit Rückwärtsgang ausgeformt ist. Bei Bedarf kann die Kulisse 16 selbstverständlich auch für ein Sechsganggetriebe oder für noch andere Zahlen von Gängen ausgeführt werden.

An der der Kulisse 16 gegenüberliegenden Seite des Abschnitts 12 mit dem größeren Durchmesser liegt noch eine runde Durchbrechung 16', die ebenfalls für die Funktion der Rastierungshülse 1 benötigt wird und die vorzugsweise ebenfalls durch Laser- oder Wasserstrahlschneiden hergestellt ist.

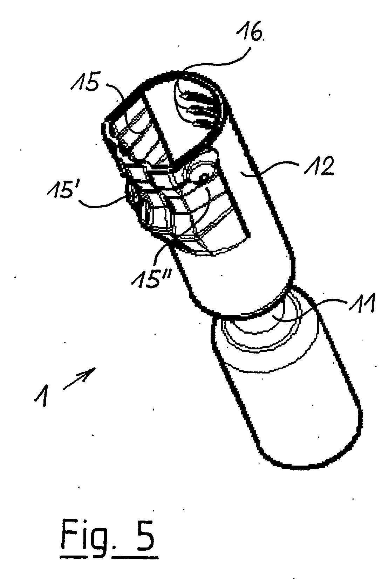

Figur 5 der Zeichnung zeigt eine zweite fertige Rastierungshülse 1, die im Unterschied zum vorhergehend beschriebenen Beispiel statt mit einer hydraulischen Flüssigkeit mit Hilfe eines Gases als Druckmedium in einem formgebenden Formwerkzeug aus einem Ausgangsrohling hergestellt ist.

Vor dieser Formgebung durch Gasdruck wird ein Ausgangsrohling auf Länge zugeschnitten und in seinem axial etwa mittigen Bereich 11 im Durchmesser eingezogen. Danach wird der so vorbereitete Ausgangsrohling in seinem dem Betrachter zugewandten Endbereich 12 durch Gasdruck in einem formgebenden Formwerkzeug zugleich aufgeweitet und geformt, wobei die innere Oberfläche des hier nicht gezeigten Formwerkzeugs, das den Ausgangsrohling während seiner Beaufschlagung mit dem inneren Gasdruck aufnimmt und umgibt, die formgebende Oberfläche bildet.

Bei Einsatz von Gas als Druckmedium wird der Ausgangsrohling zusätzlich entweder vollständig oder, wenn dies geometrisch möglich ist, gezielt nur in seinem aufzuweitenden und zu formenden Bereich erwärmt, was bevorzugt berührungslos durch elektrische Induktion geschieht. Dazu besteht das Formwerkzeug bevorzugt aus einem keramischen Material. Eine Erwärmung des Ausgangsrohlings in der Form durch elektrische Induktion wird durch das keramische Material der Form und durch das Gas nicht behindert und kann durch das keramische Material und durch das Gas hindurch erfolgen.

Bei diesem Beispiel erhält der Ausgangsrohling also in seinem zu formenden Bereich in einem einzigen Verfahrensschritt den gewünschten Durchmesser und seine gewünschte geometrische Form mit den geometrischen Konturen 15, 15' und 15".

Abschließend wird nur noch die Kulisse 16 eingeschnitten, was auch hier vorzugsweise durch Laser- oder Wasserstrahlschneiden erfolgt.

Wie die vorstehend erläuterten Verfahrensabläufe zeigen, ist die Herstellung der Rastierungshülse 1 in allen Fällen absolut schweißnahtfrei möglich.

## Patentansprüche

1. Verfahren zur Herstellung einer metallischen Rastierungshülse (1) mit einer Kulisse (16), insbesondere für ein Schaltgetriebe eines Kraftfahrzeugs, wobei' die Rastierungshülse (1) Teil eines Schaltdoms ist, der die Verbindung zwischen der inneren Schaltung des Schaltgetriebes und einem zugehörigen Gangwählhebel bildet, wobei die Rastierungshülse (1) aus einem Ausgangsrohling (10) durch Umformen und Schneiden erzeugt wird,
**gekennzeichnet durch**
folgende Verfahrensschritte:
a) aus einem Metallrohr wird ein Ausgangsrohling (10) in Form eines Rohrabschnitts abgelängt,
b) der rohrförmige Ausgangsrohling (10) wird über einen Teil seiner axialen Länge in seinem Durchmesser aufgeweitet oder eingezogen, wodurch ein hülsenförmiger, im Durchmesser gestufter' Grundkörper (14) gebildet wird,
c) der Grundkörper (14) wird **durch** wenigstens einen Preßvorgang in seine geometrische Endform gebracht und
d) in den Grundkörper (14) wird zur Bildung der Rastierungshülse (1) die Kulisse (16) eingeschnitten.

2. Verfahren nach Anspruch 1, **dadurch gekennzeichnet, daß** ein rohrförmiger Ausgangsrohling (10) mit einer axialen Länge, die mehr als doppelt so groß ist wie die axiale Länge des Grundkörpers (14), eingesetzt wird, daß der Abschnitt (12) des Ausgängsrohlings (10), der in seinem Durchmesser aufgeweitet oder eingezogen wird, ein mittlerer Abschnitt des Ausgangsrohlings (10) ist und daß nach dem Aufweiten oder Einziehen und nach oder vor dem Preßvorgang oder zwischen zwei Preßvorgängen der Ausgangsrohling (10) quer zu seiner Axialrichtung in zwei Grundkörper (14) geteilt wird.

3. Verfahren nach Anspruch 1 oder 2, **dadurch gekennzeichnet, daß** der Ausgangsrohling (10) in ein Formwerkzeug eingebracht und durch Innenhochdruck-Umformen mittels eines Druckmediums gemäß Verfahrensschritt b) nur aufgeweitet oder gemäß den Verfahrensschritt b) und c) zugleich aufgeweitet und geformt wird.

4. Verfahren nach Anspruch 3, **dadurch gekennzeichnet, daß** als Druckmedium eine Flüssigkeit verwendet wird.

5. Verfahren nach Anspruch 3, **dadurch gekennzeichnet, daß** als Druckmedium ein Gas verwendet wird.

6. Verfahren nach Anspruch 5, **dadurch gekennzeichnet, daß** der Ausgangsrohling (10) vor oder bei dem Innenhochdruck-Umformen erwärmt wird.

7. Verfahren nach Anspruch 6, **dadurch gekennzeichnet, daß** das Erwärmen induktiv erfolgt.

8. Verfahren nach einem der Ansprüche 3 bis 7, **dadurch gekennzeichnet, daß** als Formwerkzeug eine keramische Form verwendet wird, die, vorzugsweise mittig, geteilt ist.

9. Verfahren nach einem der Ansprüche 3 bis 8, **dadurch gekennzeichnet, daß** der Ausgangsrohling (10) in zwei aufeinanderfolgenden Umformschritten zum Grundkörper (14) umgeformt wird.

10. Verfahren nach Anspruch 9, **dadurch gekennzeichnet, daß** zwischen den beiden Umformschritten eine Wärmebehandlung des Ausgangsrohlings (10) erfolgt.

11. Verfahren nach Anspruch 10, **dadurch gekennzeichnet, daß** die Wärmebehandlung des Ausgangsrohlings (10) ein Glühen ist.

12. Verfahren nach Anspruch 1, **dadurch gekennzeichnet, daß** ein rohrförmiger Ausgangsrohling (10) mit einer axialen Länge, die größer ist als die axiale Länge des Grundkörpers (14), eingesetzt wird und daß der Teil der axialen Länge des Ausgangsrohlings (10), der in seinem Durchmesser aufgeweitet oder eingezogen wird, ein Endabschnitt des Ausgangsrohlings (10) ist.

13. Verfahren nach Anspruch 12; **dadurch gekennzeichnet, daß** der Ausgangsrohling (10) durch Drückwalzen aufgeweitet oder eingezogen wird.

14. Verfahren nach einem der vorhergehenden Ansprüche, **dadurch gekennzeichnet, daß** der Grundkörper (14) nach dem Preßvorgang durch Beschneiden an wenigstens einem seiner Stirnenden (17, 17') auf ein definiertes axiales Längenmaß gebracht wird.

15. Verfahren nach einem der vorhergehenden Ansprüche, **dadurch gekennzeichnet, daß** der Preßvorgang des Grundkörpers (14) nach dem Aufweiten separat und in einer eigenen zweiteiligen Preßform vorgenommen wird.

16. Verfahren nach Anspruch 15, **dadurch gekennzeichnet, daß** nach dem Preßvorgang des Grundkörpers (14) ein Geometrie-Kalibrier-Arbeitsgang erfolgt.

17. Verfahren nach einem der vorhergehenden Ansprüche, **dadurch gekennzeichnet, daß** das Einschneiden der Kulisse (16) in den Grundkörper (14) durch Laser- oder Wasserstrahlschneiden erfolgt.

## Claims

1. A method for the production of a metallic locking sleeve (1) comprising a gate (16), in particular for a manual transmission of a motor vehicle, wherein the locking sleeve (1) is a part of a gearshift dome, which forms the connection between the inner gearshift mechanism of the manual transmission and a corresponding selector lever, wherein the locking sleeve (1) is created from a blank (10) by means of deformation and cutting,
**characterized by**
the following method steps:
a) a blank (10) in the form of a pipe section is cut to length from a metal pipe,
b) the diameter of the tubular blank (10) is increased or reduced across a portion of its axial length such that a sleeve-shaped basic element (14) having a graduated diameter is formed,
c) the basic element (14) is given its final geometrical shape by means of at least one pressing process and
d) the gate (16) is cut into the basic element (14) so as to form the locking sleeve (1).

2. The method according to claim 1, **characterized in that** a tubular blank (10) comprising an axial length being more than twice as large as the axial length of the basic element (14) is used, **in that** the section (12) of the blank (10), the diameter of which is increased or reduced, is a middle section of the blank (10) and **in that** the blank (10) is divided at right angles to its axial direction into two basic elements (14) after the increase or reduction and after or prior to the pressing process or between two pressing processes.

3. The method according to claim 1 or 2, **characterized in that** the blank (10) is introduced into a form tool and is only increased according to method step b) or **in that** the blank (10) is increased and formed at the same time according to method steps b) and c) by means of internal pressure deformation using a pressure medium.

4. The method according to claim 3, **characterized in that** a liquid is used as pressure medium.

5. The method according to claim 3, **characterized in that** a gas is used as pressure medium.

6. The method according to claim 5, **characterized in that** the blank (10) is heated prior to or during the internal pressure deformation.

7. The method according to claim 6, **characterized in that** the heating is carried out inductively.

8. The method according to any one of claims 3 to 7, **characterized in that** a ceramic mold is used as form tool, which is preferably divided in its center.

9. The method according to any one of claims 3 to 8, **characterized in that** the blank (10) is deformed into the basic element (14) in two consecutive deformation steps.

10. The method according to claim 9, **characterized in that** a heat treatment of the blank (10) is carried out between the two deformation steps.

11. The method according to claim 10, **characterized in that** the heat treatment of the blank (10) is an annealing.

12. The method according to claim 1, **characterized in that** a tubular blank (10) comprising an axial length being larger than the axial length of the basic element (14) is used and **in that** the part of the axial length of the blank (10), the diameter of which is increased or reduced, is an end section of the blank (10).

13. The method according to claim 12, **characterized in that** the blank (10) is increased or reduced by means of roller spinning.

14. The method according to any one of the preceding claims, **characterized in that**, after the pressing process, the basic element (14) is brought to a defined axial length by means of cutting at least one of its front sides (17, 17').

15. The method according to any one of the preceding claims, **characterized in that**, after the increase, the pressing process of the basic element (14) is carried out separately and in its own two-part pressing mold.

16. The method according to claim 15, **characterized in that** a geometry calibration process step is carried out after the pressing process of the basic element (14).

17. The method according to any one of the preceding claims, **characterized in that** the cutting of the gate (16) into the basic element (14) is carried out by means of laser cutting or water jet cutting.

## Revendications

1. Procédé de fabrication d'un manchon de verrouillage métallique (1) avec une coulisse (16), en particulier pour une boîte de vitesses d'un véhicule automobile, le manchon de verrouillage (1) étant une partie d'une tourelle de commande des vitesses qui constitue la liaison entre le système de changement des vitesses interne de la boîte de vitesses et un levier de sélection de vitesses associé, le manchon de verrouillage (1) étant produit par formage et coupage à partir d'une ébauche de départ (10), **caractérisé par** les étapes de procédé suivantes:
a) une ébauche de départ (10) en forme de tronçon de tube est mise à longueur à partir d'un tube en métal,
b) l'ébauche de départ tubulaire (10) subit un élargissement ou un rétrécissement de son diamètre sur une partie de sa longueur axiale, ce qui forme un corps de base (14) en forme de manchon à diamètre étagé,
c) le corps de base (14) est mis dans sa forme géométrique finale par au moins une opération de compression et
d) on réalise la coulisse (16) par entaillage du corps de base (14) pour former le manchon de verrouillage (1).

2. Procédé selon la revendication 1, **caractérisé en ce qu'**une ébauche de départ tubulaire (10) de longueur axiale équivalente à plus du double de la longueur axiale du corps de base (14) est mise en oeuvre, **en ce que** le tronçon (12) de l'ébauche de départ (10) qui subit un élargissement ou un rétrécissement de son diamètre est un tronçon central de l'ébauche de départ (10) et **en ce que**, après l'élargissement ou le rétrécissement et avant ou après l'opération de compression ou entre deux opérations de compression, l'ébauche de départ (10) est divisée en deux corps de base (14) transversalement par rapport à son sens axial.

3. Procédé selon la revendication 1 ou 2, **caractérisé en ce que** l'ébauche de départ (10) est mise dans un moule et, par formage sous haute pression interne, au moyen d'un fluide de pression, est uniquement élargie, conformément à l'étape de procédé b), ou subit simultanément un élargissement et un formage, conformément aux étapes de procédé b) et c).

4. Procédé selon la revendication 3, **caractérisé en ce qu'**on utilise un liquide en tant que fluide de pression.

5. Procédé selon la revendication 3, **caractérisé en ce qu'**on utilise un gaz en tant que fluide de pression.

6. Procédé selon la revendication 5, **caractérisé en ce que** l'ébauche de départ (10) est chauffée avant ou lors du formage sous haute pression interne.

7. Procédé selon la revendication 6, **caractérisé en ce que** le chauffage se produit par induction.

8. Procédé selon l'une des revendications 3 à 7, **caractérisé en ce qu'**on utilise, un tant que moule, un moule céramique qui est divisé de préférence centralement.

9. Procédé selon l'une des revendications 3 à 8, **caractérisé en ce que** l'ébauche de départ (10) subit un formage en deux étapes de formage successives pour former le corps de base (14).

10. Procédé selon la revendication 9, **caractérisé en ce qu'**un traitement thermique de l'ébauche de départ (10) a lieu entre les deux étapes de formage.

11. Procédé selon la revendication 10, **caractérisé en ce que** le traitement thermique de l'ébauche de départ (10) est un recuit.

12. Procédé selon la revendication 1, **caractérisé en ce qu'**une ébauche de départ tubulaire (10) de longueur axiale supérieure à la longueur axiale du corps de base (14) est mise en oeuvre et **en ce que** la partie de la longueur axiale de l'ébauche de départ (10) qui subit un élargissement ou un rétrécissement de son diamètre est un tronçon terminal de l'ébauche de départ (10).

13. Procédé selon la revendication 12, **caractérisé en ce que** l'ébauche de départ (10) est élargie ou rétrécie par fluotournage.

14. Procédé selon l'une des revendications précédentes, **caractérisé en ce que** le corps de base (14), après l'opération de compression, est mis à une longueur axiale définie par coupage en au moins l'une de ses extrémités frontales (17, 17').

15. Procédé selon l'une des revendications précédentes, **caractérisé en ce que** l'opération de compression du corps de base (14) est réalisée séparément après l'élargissement et dans un propre moule de compression en deux pièces.

16. Procédé selon la revendication 15, **caractérisé en ce qu'**a lieu, après l'opération de compression du corps de base (14), une opération de calibrage géométrique.

17. Procédé selon l'une des revendications précédentes, **caractérisé en ce que** la réalisation de la coulisse (16) par entaillage du corps de base (14) se fait par coupe au laser ou au jet d'eau.
